# EUROPEAN PATENT APPLICATION

(11) **EP 1 386 861 A1**
(43) Date of publication of application: **04.02.2004**
(21) Application number: 03013238.5
(22) Date of filing: 12.06.2003
(51) Int. Cl.: B65G 21/20, B65G 47/76

(54) **Device for transferring products from a first conveyor to a second conveyor**

(30) Priority: 31.07.2002 IT MI20021721
(71) Applicant: System Plast S.p.A., 24060 Telgate (Bergamo) (IT)
(72) Inventor: Marsetti, Sergio, 24060 Castelli Calepio (Bergamo) (IT)
(74) Representative: Ripamonti, Enrico, Dr. Ing.

(57) **Abstract**

A transfer device, for transferring products from a first conveyor (2) to a second conveyor (3), comprising, for said first and second conveyor (2, 3), at least one first guide element (1, 1') shaped in such a manner as to guide said conveyors (2, 3) along at least a central portion (T3) side by side along an at least partially curved path, there being provided at least above said central portion (T3) second lateral guide elements (4) for the products (12) conveyed on said conveyors (2, 3), said second guide elements (4) being, at least in correspondence with said central portion (T3), shaped and positioned in such a manner as to guide the products along a path which is substantially rectilinear at least in that portion in which the products pass from one conveyor to the other.

## Description

The present invention relates to a device for transferring products from a first conveyor to a second conveyor.

Known devices of the aforesaid type comprise conveyor guide elements arranged to guide a portion of said conveyors along a common rectilinear direction and along two side-by-side parallel rectilinear paths, and curved lateral guide elements positioned above the conveyors to guide the products conveyed by said conveyors from one conveyor to the other in correspondence with said portion, said guide elements being shaped in such a manner as to guide the products from one conveyor to the other along a curved path.

Known devices are of relatively complicated construction, and require modifications to the conveyor support structure and/or relatively lengthy and difficult assembly operations on said structure which do not enable the products to flow continuously and unidirectionally from one conveyor to the other. Moreover the known devices have not always proved able to reliably transfer from one conveyor to the other those products having a relatively unstable resting base (such as empty bottles with a small resting base).

An object of the present invention is to provide a transfer device which is of simple construction, which can be easily and rapidly fixed to usual conveyor support structures, and which enables optimum product transfer from one conveyor to the other even if said products present a relatively unstable resting base.

These and other objects which will be apparent to an expert of the art are attained by a device in accordance with the characterising part of the main claim.

The present invention will be more apparent from the accompanying drawings which are provided by way of non-limiting example and in which:
Figures 1-3 are schematic perspective views of a device of the invention without conveyors, seen from above, from the front and from below respectively;
Figures 4-5 are schematic views of a device complete with conveyors but without conveyed products, seen from above and in perspective view from the front respectively;
Figures 6-7 are schematic views of a complete device shown in perspective view from above and from the front respectively;
Figures 8-9 show schematic views of possible variants seen from above;
Figures 10-17 show schematic sectional views of possible variants of the conveyor guide element, taken on the lines A-A of Figures 8 and 9.

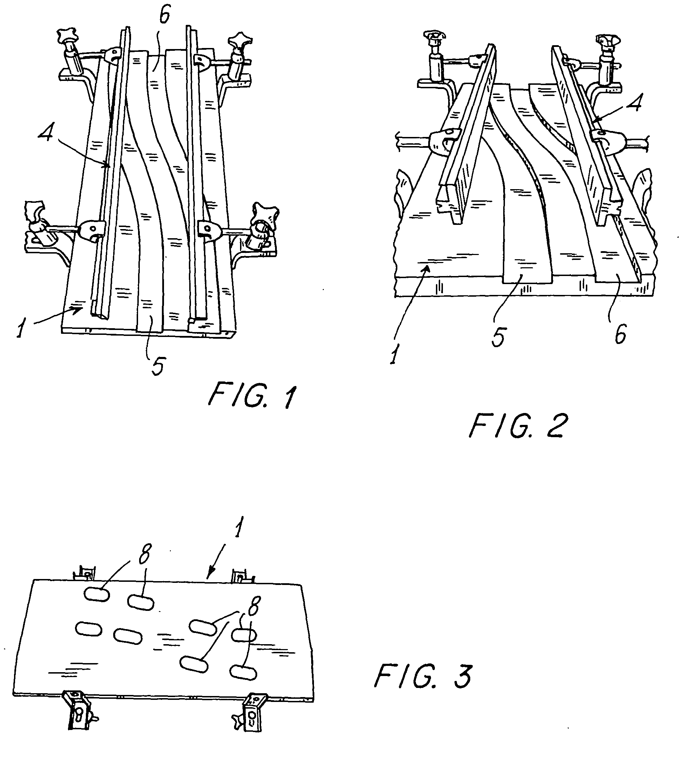

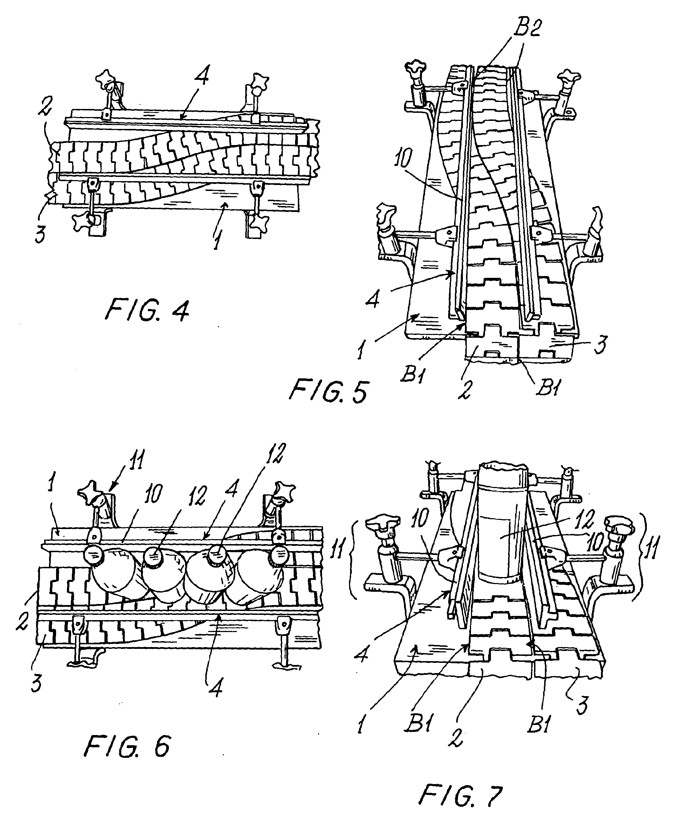

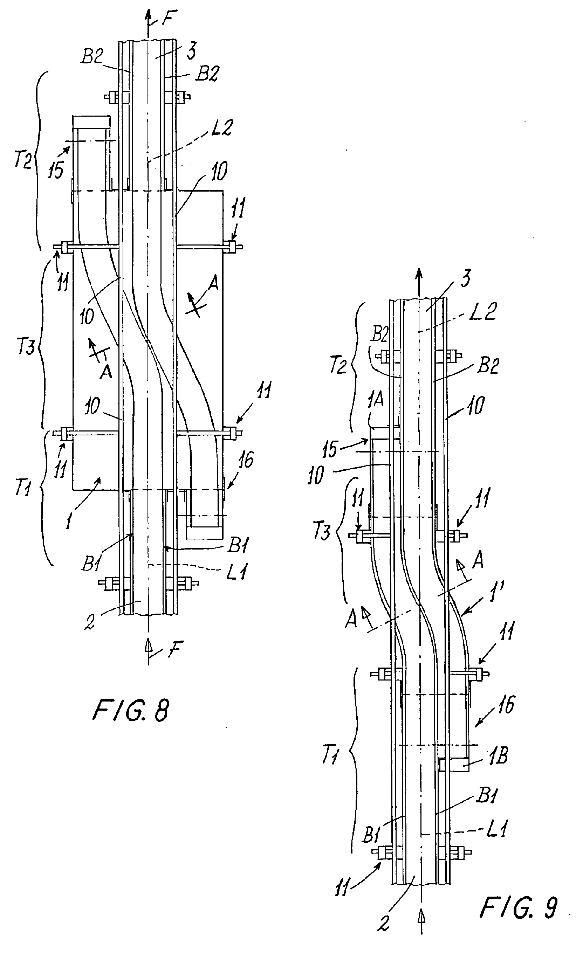

With reference to Figures 1-7, a device according to the invention comprises a first guide element 1 for two conveyors 2, 3, and second guide elements 4 provided above the conveyors 2, 3. The first guide element 1 comprises a plate in which two tracks 5, 6 of conventional form are provided to receive and guide the lower part of the usual conveyors 2, 3. These tracks have a shape such as to guide the conveyors substantially parallel rectilinearly and side by side along a first entry portion T1 (Figures 8, 9) and along a second final exit portion T2, whereas along a third central portion T3 they are guided substantially in a curved manner such that the longitudinal axis L1 of a first conveyor 2 along the entry portion T1 coincides substantially with the longitudinal axis L2 of the other conveyor 3 along the exit portion T2.

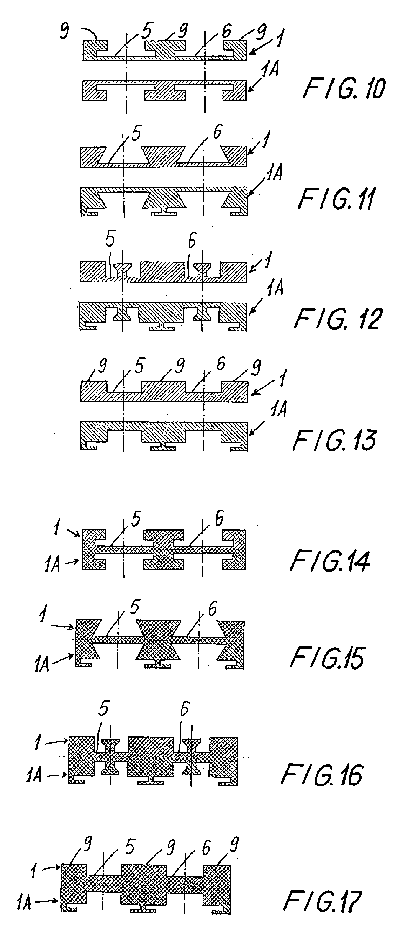

The guide element 1 comprises usual members for retaining the conveyors in their relative guide tracks 5, 6, in particular along the portion T3 in which the conveyors take a curved path. For this purpose the guide element can comprise, below said tracks 5, 6 and in correspondence with the curved portion T3, usual recessed seats to receive magnetic elements 8 to attract the conveyors and to maintain them adhering to the support rails 9 (Figure 10) of the tracks 5, 6. These magnetic elements and the relative seats are advantageously of the type described in EP 0916599, the content of which is to be considered as transcribed into the present text. In order to cooperate with said magnetic elements the conveyors can be constructed at least partly of ferromagnetic material or if of plastic construction they must comprise at least a part formed of ferromagnetic material, for example the pin connecting the various modules which when connected together form the conveyor. As an alternative to the magnetic solution the conveyors can be maintained adhering to the relative guide tracks 5, 6 by a form fit between a lower part of the modules forming the conveyor and the seat in the tracks 5, 6 as shown Figures 10-12, and as is usual for the expert of the art.

The guide element 1 also comprises a lower part 1A, of conventional type, to guide the return branch of the conveyors; this lower part can be divided and separated from the upper part (as shown in Figures 10-13) or be made integral with it (as shown in Figures 14-17).

The conveyors 2, 3 are of conventional type and comprise a plurality of usual modules connectable together, they presenting an upper support surface for the products to be conveyed and enabling the conveyor to follow a curved path.

Above the conveyors and guide element 1 there are provided, for the products 12 conveyed by said conveyors, second guide elements 4 presenting usual rectilinear side walls 10 to make contact with said products. The side walls 10 are fixed conventionally to supports 11 which are fixed to the guide element 1 or to a support structure (not shown) for the conveyors (also of conventional type). Because of the particular shape of the relative support members 11, the rectilinear side walls 10 can be made to withdraw from or approach each other to adapt to the dimensions of the conveyed products. The side walls 10 are disposed substantially directly above the edges B1 of the rectilinear initial portion T1 of a first conveyor 2 and above the edges B2 of the rectilinear final portion T2 of the second conveyor 3, to guide the conveyed products always along a rectilinear path even within the central portion T3 in passing from one conveyor to the other.

The device of the invention is preferably used to connect the terminal part of a first conveyor to the initial part of a second conveyor so as to give continuity to a conveying line when this line has a length which cannot be covered by a single conveyor or when for other reasons more than one conveyor has to be provided. With reference to Figures 8 and 9 these show the terminal part of a first conveyor 2 and the initial part of a second conveyor 3 (the product advancement direction is indicated by the arrows F). At its end, the first conveyor 2 comprises, in correspondence with and parallel to the rectilinear portion T2 of the second conveyor, a usual drive station 15 comprising a conventional motorized toothed wheel secured in conventional manner to the conveyor support structure or to the guide element 1. The other conveyor 3 presents, in correspondence with and parallel to the rectilinear portion T1 of the first conveyor 2, a usual reversal station comprising a conventional idle toothed wheel connected in usual manner to the conveyor support structure or to the guide element 1.

Figure 9 shows a variant of the described guide device (in which those parts common with the preceding embodiment are indicated by the same reference numerals) in which the guide element 1' comprises prongs 1A, 1B for supporting the drive station 15 and reversal station 16. In this embodiment the guide element is not of rectilinear shape but instead of curved shape with a rectilinear initial portion, a curved central portion and a final rectilinear portion parallel to the first but with its longitudinal axis spaced from that of the first portion. This guide element enables a reduction in the overall size and in the material used to construct the element.

In a further variant, not shown, the final portion of the conveyor 2 and the initial portion of the conveyor 3 could be inclined downwards to the plane containing the central portion T3 of the two conveyors at which the products pass from one conveyor to the other.

It should be noted that in addition to rectilinear and curved, the guide element can be of any other shape, even irregular, to form conveyor guide tracks which enable the products to pass from one conveyor to the other by following a rectilinear rather than a curved path.

## Claims

1. A transfer device, for transferring products from a first conveyor (2) to a second conveyor (3), **characterised by** comprising, for said first and second conveyor (2, 3), at least one first guide element (1, 1') shaped in such a manner as to guide said conveyors (2, 3) along at least a central portion (T3) side by side along an at least partially curved path, there being provided at least above said central portion (T3) second lateral guide elements (4) for the products (12) conveyed on said conveyors (2, 3), said second guide elements (4) being, at least in correspondence with said central portion (T3), shaped and positioned in such a manner as to guide the products along a path which is substantially rectilinear at least in that portion in which the products pass from one conveyor to the other.

2. A device as claimed in claim 1, **characterised in that** the first guide element (1, 1') is arranged to guide a final end portion of a first conveyor (2) and an initial end portion of a second conveyor (3).

3. A device as claimed in claim 1, **characterised in that** the first guide element (1, 1') is shaped to guide the two conveyors (2, 3) in a manner parallel to each other, side by side and rectilinear, along an entry portion (T1) and along an exit portion (T2), and in a substantially curved manner along said central portion (T1) such that the longitudinal axis (L1) of a first conveyor (2) within the entry portion (T1) coincides substantially with the longitudinal axis (L2) of the other conveyor (3) within the exit portion (T2), the products being conveyed to the entry of said device on said first conveyor (2) and from the exit of said device on said second conveyor (3).

4. A device as claimed in claim 1, **characterised in that** the second lateral guide elements (4) extend for the entire length of that portion (T1, T2, T3) of the two conveyors (2, 3) along which they are guided side by side by the first guide element (1, 1').

5. A device as claimed in claim 1, **characterised in that** the second guide elements (4) extend for the entire length of the first guide element (1, 1').

6. A device as claimed in claim 1, **characterised in that** the first guide element (1, 1') is formed in one piece and/or presents a substantially flat shape.

7. A device as claimed in claim 1, **characterised in that** the conveyors (2, 3) are of the chain type and comprise a plurality of elements modularly connected together.

8. A device as claimed in claim 7, **characterised in that** the conveyors (2, 3) are at least partly formed of a ferromagnetic material, the first guide element (1) presenting magnetic means (8) to maintain the conveyors in contact with the guide element within the curved portion (T3).

9. A device as claimed in claim 1, **characterised in that** the curved path connects together two parallel rectilinear portions.

10. A device as claimed in claim 1, **characterised in that** the first guide element (1, 1') comprises a separate recessed guide track (5, 6) for each conveyor (2, 3), said guide tracks comprising means for retaining the conveyors in contact with said guide tracks at least within the portion (T3) in which the conveyors present a curved path.

11. A device as claimed in claim 1, **characterised in that** the first guide element (1, 1') comprises a lower part (1A) for guiding the return branch of the conveyors (2, 3).

12. A device as claimed in claim 1, **characterised in that** the first guide element (1') presents support portions (1A, 1B) for the drive station (15) and reversal station (16) of the first conveyor (2) and second conveyor (3) respectively.

13. A device as claimed in claim 1, **characterised in that** the second guide elements (4) comprise lateral side walls (10) arranged to make contact with the conveyed products (12), said side walls being positioned substantially directly above the edges (B1) of the rectilinear initial portion (T1) of a first conveyor (2) and above the edges (B2) of the rectilinear final portion (T2) of the second conveyor (3), to guide the conveyed products always along a rectilinear path even within the central portion (T3) in passing from one conveyor to the other.

14. A conveyor comprising a transfer device in accordance with one of claims from 1 to 13.
